(19) Europäisches Patentamt
European Patent Office
Office européen des brevets

(11) **EP 4 786 363 A1**

(12) **EUROPEAN PATENT APPLICATION**
published in accordance with Art. 153(4) EPC

(43) Date of publication:
**05.08.2026 Bulletin 2026/32**

(21) Application number: **24872342.1**

(22) Date of filing: **26.09.2024**

(51) International Patent Classification (IPC):
**B65D 25/20** (2006.01)    **B65D 85/804** (2006.01)

(52) Cooperative Patent Classification (CPC):
**B65D 25/20; B65D 85/804; Y02W 90/10**

(86) International application number:
**PCT/JP2024/034326**

(87) International publication number:
**WO 2025/070556 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 JP 2023168371**

(71) Applicant: **Mitsui Chemicals Asahi Life Materials
Co., Ltd.
Tokyo 104-0028 (JP)**

(72) Inventors:
• **SHIMIZU, Toshiyuki**
  **Tokyo 104-0028 (JP)**
• **SAKAMOTO, Yuichiro**
  **Tokyo 104-0028 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **RING FOR BEVERAGE EXTRACTION POD, AND BEVERAGE EXTRACTION POD INCLUDING SAID RING**

(57)    Provided are: a ring which is for a beverage extraction pod, enables home composting, and has favorable heat sealability to a filter; and a beverage extraction pod in which a filter is attached to said ring. This ring for a beverage extraction pod, including a filter having a volume for storing a material to be extracted, a cylindrical side wall attached to a flange surface of the pod and adapted to constitute the beverage extraction pod, and the flange surface protruding outward from the cylindrical side wall, is characterized by comprising a thermoplastic resin composition (a) that mainly contains a thermoplastic resin A and is different from a thermoplastic resin composition (b) mainly containing a thermoplastic resin B constituting the filter, wherein the thermoplastic resin A is polyalkylene dicarboxylate, and the melting point of the thermoplastic resin composition (a) is lower than the melting point of the thermoplastic resin composition (b).

Fig. 1

**Description**

FIELD

The present invention relates to a ring for a beverage extraction pod, and to a beverage extraction pod comprising the ring.

BACKGROUND

Extraction pods for obtaining beverages are generally constructed by heat sealing a reinforcing ring and a filter which is to house a material to be extracted. Biodegradable rings are known, and for example, PTL 1 discloses a ring comprising polylactic acid (PLA), polyhydroxyalkanoate (PHA), polybutylene succinate (PBS) or a starch blend.

[CITATION LIST]

[PATENT LITERATURE]

[PTL 1] Japanese Patent Public Inspection No. 2017-522150

SUMMARY

[TECHNICAL PROBLEM]

In order to obtain a beverage extraction pod capable of household composting (home composting), the constituent ring and filter elements must both be composed of a thermoplastic resin suitable for home composting. Filters comprising polybutylene adipate terephthalate (PBAT) are known types of home compostable filters. However, Reference 1 does not disclose a beverage extraction pod comprising a filter and a ring wherein the beverage extraction pod itself is home compostable and the ring and filter have satisfactory heat sealability.

Given the current level of the prior art, the problem to be solved by the invention is to provide a beverage extraction pod that is home compostable and that comprises a beverage extraction pod ring exhibiting satisfactory heat sealability with filters, as well as a filter bonded to the beverage extraction pod ring.

[SOLUTION TO PROBLEM]

As a result of much diligent experimentation with the aim of solving the aforementioned problem, the present inventors have found that if the same type of thermoplastic resin composition with the same melting point is used as the thermoplastic resin composition composing both the filter and the ring, an example being the use of PBS as the thermoplastic resin composition for the filter and the use of PBS with the same melting point, as the thermoplastic resin composition for the ring, then it is not possible to obtain sufficient adhesion when the ring and filter are heat sealed to produce a beverage extraction pod. The present inventors have also found, unexpectedly, that the aforementioned problem can be solved by using thermoplastic resin compositions with specific combinations for the filter and ring, and ensuring a specific difference in their melting points, and have completed this invention upon further confirming that if the ring is also home compostable, the beverage pod as a whole comprising the ring and filter is home compostable. Specifically, the present invention provides the following.

[1] A beverage extraction pod ring comprising a filter with a volume sufficient to house a material to be extracted, a tubular side wall bonded to a flange surface of the ring and adapted to form a beverage extraction pod, and a flange surface protruding outward from the tubular side wall, wherein the ring is constructed of a thermoplastic resin composition (a) which is composed mainly of a thermoplastic resin A and differs from another thermoplastic resin composition (b) composed mainly of a thermoplastic resin B forming the filter, the thermoplastic resin A being a polyalkylene dicarboxylate, and the melting point of the thermoplastic resin composition (a) being lower than the melting point of the thermoplastic resin composition (b).

[2] The beverage extraction pod ring according to claim 1, wherein the difference in melting points of the thermoplastic resin composition (a) and the thermoplastic resin composition (b) is 10°C or more.

[3] The beverage extraction pod ring according to [1] or [2] above, wherein the thermoplastic resin A is polyalkylene dicarboxylate in which either or both aliphatic dicarboxylic acid and straight-chain glycol supplied for polycondensation are of two or more types.

[4] The beverage extraction pod ring according to any one of [1] to [3] above, wherein the thermoplastic resin A is polybutylene succinate adipate (PBSA).

[5] The beverage extraction pod comprising the beverage extraction pod ring according to any one of [1] to [4] above, and the filter bonded to the flange surface of the ring and having a volume sufficient to house a material to be extracted.

[6] The beverage extraction pod according to [5] above, wherein the ring has an absolute biodegradability of 70% or greater within 12 months, in a biodegradability test in a composting environment of 28°C according to ISO 14855-1.

[7] The beverage extraction pod according to [5] or [6] above, wherein the thermoplastic resin B is polybutylene adipate terephthalate (PBAT).

[8] The beverage extraction pod according to any one of [5] to [7] above, wherein the filter is a nonwoven fabric.

[9] The beverage extraction pod according to any one of [5] to [8] above, wherein an air permeability of the filter is 10 $cm^3/(cm^2 \cdot s)^2$ or greater.

[10] The beverage extraction pod according to any one of [5] to [9] above, wherein the ratio of the thickness difference between the ring and the filter, as calculated by [{(the thickness of flange surface of beverage extraction pod ring) - (the thickness of filter) I /(the thickness of flange surface of beverage extraction pod ring)] × 100, is 70% or greater.

[ADVANTAGEOUS EFFECTS OF INVENTION]

The beverage extraction pod ring of the disclosure and the beverage extraction pod comprising a filter bonded to it are home compostable as a whole, while the bonding strength between the flange surface of the ring and the filter is also high.

BRIEF DESCRIPTION OF DRAWINGS

Fig. 1 is a schematic perspective view of a beverage extraction pod ring according to an embodiment of the invention.
Fig. 2 is a schematic diagram of a beverage extraction pod according to an embodiment of the invention, which comprises a ring.

DESCRIPTION OF EMBODIMENTS

The invention will now be explained with reference to the specific embodiments depicted in the accompanying drawings. However, the invention is not limited to the specific embodiments indicated in the following detailed description and drawings.

One embodiment of the invention is a beverage extraction pod ring comprising a filter with a volume for housing of a material to be extracted, a tubular side wall bonded to the flange surface of the filter and adapted to form a beverage extraction pod, and a flange surface protruding outward from the tubular side wall, wherein the ring is constructed of a thermoplastic resin composition (a) which is composed mainly of a thermoplastic resin A and differs from another thermoplastic resin composition (b) composed mainly of a thermoplastic resin B forming the filter, the thermoplastic resin A being a polyalkylene dicarboxylate, and the melting point of the thermoplastic resin composition (a) being lower than the melting point of the thermoplastic resin composition (b).

Throughout the present specification, the "flange surface" of the "beverage extraction pod ring" will sometimes be referred to as the "flange section".

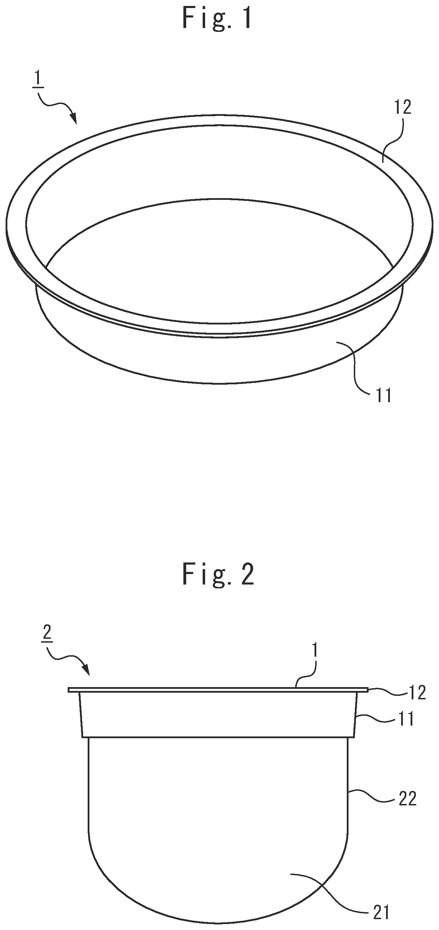

Fig. 1 is a simplified perspective view of a beverage extraction pod ring according to an embodiment of the invention.

The ring 1 of this embodiment comprises a side wall 11 and a flange section 12 protruding from the side wall 11. The flange section 12 shown in Fig. 1 has a uniform thickness, i.e. a constant thickness across its entire length.

Several examples of dimensions of the ring of the embodiment will now be described. The shape of the ring may be appropriately designed according to the purpose of use, in addition to the shapes mentioned below.

In Figs. 1 and 2, the flange section 12 protrudes from one edge of the side wall 11 toward the outer side of the ring 1. The angle formed between the side wall 11 and the flange section 12 is 90° or greater.

The side wall 11 and flange section 12 may be produced as an integral piece, and for example, they may be produced by hot and/or injection molding, compression working or hot molding.

In Figs. 1 and 2, the side wall 11 has a tapered shape with a gradually widening circumference in the direction in which the flange section 12 protrudes.

The inner diameter of the narrowest section of the side wall 11 may be 41.0 mm to 43.0 mm, for example.

The inner diameter of the widest section of the side wall 11 may be 44.0 mm to 45.0 mm, for example.

The thickness of the side wall 11 may be 0.1 mm to 1.6 mm, and is preferably 0.3 to 1.1 mm.

The inner diameter of the flange section 12 may be 44.0 mm to 45.0 mm, for example. The outer diameter of the flange section 12 may be 50.0 mm to 52.0 mm, for example.

The thickness of the ring flange section 12 may be 0.5 mm to 10.0 mm, preferably 0.5 mm to 8.0 mm and more preferably 1.0 mm to 5.0 mm from the viewpoint of home compostability of the ring. If it is 0.5 mm or greater, it will be possible to obtain sufficient bonding strength when the filter and ring have been heat sealed. While a larger thickness of the flange section 12 is preferred from the viewpoint of shape retention of the ring, it is preferably 10.0 mm or smaller from the viewpoint of shortening the cooling time after heat sealing of the ring flange section 12 and the filter.

The dimensions of the ring may be modified as appropriate. The shape, arrangement, number and dimensions of the reduced-thickness region or groove may also be modified as appropriate. For example, the reduced-thickness region may have a shape which is circular, square, rectangular or a combination thereof, or the equivalent contour of such a shape. The horizontal cross-section of the side wall is not limited to being circular or cylindrical, and may be polygonal, such as triangular, square, rectangular, pentagonal, hexagonal, octagonal or dodecagonal. The flange section 12 may be any member for joining between the edge of the extraction pod and the edge of the beverage extraction device for the purpose of beverage extraction, and it preferably has the same shape as the contour of the ring, although it only needs to be in a form that performs the role of joining; for example, a portion of the contour of the flange section 12 shown in Fig. 1 may be omitted in order to reduce the amount of thermoplastic resin used for the flange section 12. The flange section 12 may also have a shape other than circular or cylindrical.

The melting point (Tm) of the ring is lower than the melting point of the filter. The phrase "melting point of the ring" is synonymous with "melting point of the thermoplastic resin composition (a)", and it may be designed based on the starting materials for the thermoplastic resin A used as the main component of the thermoplastic resin composition (a), the additives used depending on the purpose of use, and their amounts. The melting point of the thermoplastic resin composition (a) may be 80°C to 165°C. From the viewpoint of the heat sealability of the filter and ring, and the cooling property after heat sealing, the melting point is preferably 80°C to 130°C and more preferably 80°C to 115°C.

The thermoplastic resin A in the thermoplastic resin composition (a) of the ring of the embodiment is a polyalkylene dicarboxylate obtained as the polycondensation product of an aliphatic dicarboxylic acid and a straight-chain glycol. By including thermoplastic resin A as the main component of the thermoplastic resin composition (a), it is possible to impart home compostability to the ring and thus provide a beverage extraction pod that is home compostable. The thermoplastic resin A is preferably a polyalkylene dicarboxylate wherein either or both the aliphatic dicarboxylic acid and the straight-chain glycol are of two or more types. The content of the polyalkylene dicarboxylate as thermoplastic resin A is 50 mass% to 100 mass% with respect to the total mass of the thermoplastic resin composition (a), and from the viewpoint of home compostability and heat sealability it may be 70 mass% to 95 mass%.

As used herein, the phrase "thermoplastic resin composition (a) composed mainly of thermoplastic resin A" means that the thermoplastic resin composition (a) comprises thermoplastic resin A at 50 mass% or greater.

Examples of aliphatic dicarboxylic acids include succinic acid, adipic acid and sebacic acid.

Examples of straight-chain glycols include 1,4-butanediol and polyethylene glycol.

The polyalkylene dicarboxylate as thermoplastic resin A is preferably polybutylene succinate adipate obtained by polycondensation of succinic acid and adipic acid, as aliphatic dicarboxylic acids, with 1,4-butanediol as a straight-chain glycol (hereunder also referred to as "PBSA").

The thermoplastic resin composition (a) composing the ring of the embodiment may be a blend of another biodegradable thermoplastic resin in order to obtain the desired melting point. For example, polybutylene succinate (hereunder also referred to as "PBS") may be blended together with thermoplastic resin A of the embodiment. From the viewpoint of improving the heat sealability by lower crystallinity, as well as the viewpoint of home compostability, the amount of PBS blend (mass% of PBS with respect to the total mass of the thermoplastic resin composition (a) comprising PBSA and PBS) may be greater than 0% and less than 50%. From the same viewpoint, the amount of PBS blend may be 5% to 30%. Depending on the purpose, the thermoplastic resin composition (a) may also comprise one or more additives such as flexibilizers, plasticizers, pigments, antistatic agents or biodegradability agents.

From the viewpoint of heat sealability between the ring and filter, the beverage extraction pod of the embodiment preferably does not employ the same type of composition for the thermoplastic resin composition (a) and the thermoplastic resin composition (b), but rather uses thermoplastic resin compositions with different melting points. If the resin design is such that the melting point of the thermoplastic resin composition (a) is lower than the melting point of the thermoplastic resin composition (b), then the molten thermoplastic resin composition (a) will more easily permeate in the thickness direction of the filter (nonwoven fabric) during the heat sealing step, allowing the desired heat seal strength to be obtained. The difference in melting points of the thermoplastic resin composition (a) and thermoplastic resin composition (b) is more preferably 1°C or more, even more preferably 3°C or more, yet more preferably 10°C or more and most preferably 18°C or more. A melting point difference of at least 1°C is useful from the viewpoint of increasing the shape retention since the thermoplastic resin composition (a) melts while maintaining the structure of the filter (nonwoven fabric).

In the beverage extraction pod of the embodiment, the thickness of the filter (nonwoven fabric) is preferably smaller than the thickness of the ring flange surface, and more preferably the thickness difference ratio between the ring flange surface and the filter (nonwoven fabric) is set to within a specified range. The thickness difference ratio between the ring flange surface and the filter (nonwoven fabric) is the value calculated by the following formula:

{(Thickness of flange surface of beverage extraction pod ring) - (thickness of filter)}/(thickness of flange surface of beverage extraction pod ring) $\times$ 100.

If the thickness difference ratio between the ring flange surface and the filter (nonwoven fabric) is within a specified range it will be possible to obtain a beverage extraction pod with satisfactory heat sealability and suitability for high production. From the viewpoint of facilitating temperature transmission during heat sealing and for adhesive force between the thermoplastic resin A and thermoplastic resin B, the thickness difference ratio between the ring flange surface and the filter is preferably 10% or greater. A large filter thickness will make it difficult for heat generated from the filter side to be transmitted to the ring flange surface. From the viewpoint of improving productivity during heat sealing of the ring flange surface and filter, the thickness difference ratio between the ring flange surface and the filter is preferably 99% or lower. If the thickness of the ring flange surface itself is small the ring may deform during heat sealing, and if the thickness of the ring flange surface is large a greater amount of resin will be required in the thermoplastic resin composition (a) in order to bond with the filter, thus requiring more time for cooling after heat sealing of the ring and filter, and resulting in lower productivity for the beverage extraction pod. From the same viewpoint, the thickness difference ratio between the ring flange surface and the nonwoven fabric for the embodiment is more preferably at least 40% and even more preferably at least 70% of the thickness of the ring flange surface.

The degree of crystallinity of the thermoplastic resin composition (a) composing the ring of the embodiment is preferably 10% to 70%, more preferably 15% to 60%, even more preferably 20% to 45% and yet more preferably 20% to 35%. A lower degree of crystallinity corresponds to more satisfactory heat sealability, while a degree of crystallinity of 70% or lower can result in a home compostable ring having excellent heat sealability with the filter.

Fig. 2 is a schematic diagram showing a beverage extraction pod 2 according to an embodiment of the invention. The beverage extraction pod 2 of the embodiment comprises a ring 1, and a filter 22 having a volume 21 sufficient to house a material to be extracted which is used to obtain a desired beverage, such as ground coffee, powdered coffee, tea leaves, chocolate or powdered milk.

From the viewpoint of shape retention, it is sufficient if the melting point of the filter 22 (the melting point of the thermoplastic resin composition (b), when the filter is a nonwoven fabric), is higher than the melting point of the thermoplastic resin composition (a) of the ring at 80°C to 165°C, with the melting point difference specified above.

The filter 22 is preferably a thermoforming material that passes through liquids and has a filtration function. From the viewpoint of heat sealability, it is preferred to use a nonwoven fabric. From the viewpoint of the home composting, the thermoplastic resin B in the thermoplastic resin composition (b) composing the nonwoven fabric may be polyhydroxybutyrate valerate (PHBV), polyhydroxybutyrate (PHB), nylon 4 (PA4), polyglycolic acid (PGA), polycaprolactone (PCL), polybutylene succinate (PBS), polybutylene succinate adipate (PBSA), polybutylene terephthalate succinate (PBTS), polybutylene succinate carbonate (PBSC), polybutylene adipate terephthalate (PBAT), polyethylene succinate (PES), polyethylene terephthalate succinate (PETS) or polyvinyl alcohol (PVA). The thermoplastic resin composition (b) used may be a single type or a plurality of different thermoplastic resins B. However, the thermoplastic resin composition (a) is excluded among these for use as the thermoplastic resin composition (b). From the viewpoint of home composting, moldability of the nonwoven fabric, heat resistance and adhesion with the ring, thermoplastic resin B is preferably PBSA, PBAT or PBS, or a combination thereof, as the major component, and from the viewpoint of home compostability it is more preferably PBAT. Depending on the purpose, the thermoplastic resin composition (b) may also comprise one or more additives such as flexibilizers, plasticizers, pigments, antistatic agents or biodegradability agents.

As used herein, the phrase "thermoplastic resin composition (b) composed mainly of thermoplastic resin B" means that the thermoplastic resin composition (b) comprises thermoplastic resin B at 50 mass% or greater.

The method for producing a nonwoven fabric to be used in the filter of the embodiment is not particularly restricted, and a publicly known spunbond method, melt-blown method, airlaid method, carding method or papermaking method may be used. The bonding method used may be embossing, thermal bonding, columnar flow entanglement, mechanical tangling or needle punching. The method for producing a nonwoven fabric made from filaments is preferably a melt spinning method and more preferably a spunbond method, which will allow more efficient production and help inhibit napping after molding.

The nonwoven fabric in the filter of the embodiment may have a layered structure, such as an SS, SSS, SSSS, SMS, SMMS or SMSM layered structure, for example. Here, "S" represents a long filament nonwoven fabric obtained by a spunbond method, and "M" represents a superfine nonwoven fabric obtained by a melt-blown method. A staple fiber nonwoven fabric layer may be layered using a nonwoven fabric as the base material, or it may be a hydroentangled nonwoven fabric combined with a cellulose fiber layer.

The shapes of the fibers composing the nonwoven fabric in the filter of the embodiment are not particularly restricted, and any irregular cross-sections such as round, flat, C-shaped, Y-shaped or V-shaped cross-sections, or hollow structures, sea-island structures, sheath-core structures or split fiber structures, may be used.

The basis weight of the filter may be appropriately selected depending on the material to be extracted, but from the viewpoint of thickness and air permeability, it is preferably 10 g/m² to 250 g/m².

The thickness of the filter is preferably 0.1 mm to 1.0 mm. The thickness of the filter is preferably 0.1 mm or greater from the viewpoint of adhesion with the ring, and it is preferably 1.0 mm or smaller from the viewpoint of easier transmission of temperature during heat sealing.

The air permeability of the filter (nonwoven fabric) may be appropriately selected depending on the material to be extracted. From the viewpoint of heat sealability, the structure of the nonwoven fabric preferably has numerous voids, and therefore the air permeability of the filter is preferably 10 cm³/(cm²·s) or greater and more preferably 20 cm³/(cm²·s) or greater. The upper limit for the air permeability may be set as appropriate for the purpose of use, but when the material to be extracted is coffee powder, it is preferably no greater than 100 cm³/(cm²·s) from the viewpoint of powder leakage.

The air permeability of the filter can be adjusted by the fiber size in the nonwoven fabric. The fiber size in the nonwoven fabric may be 6 μm to 35 μm.

The filter 22 may be disposed on the inner side of the side wall 11 of the ring 1.

Another embodiment of the invention is a beverage extraction pod comprising a beverage extraction pod ring, and a filter bonded at the ring flange surface and having a volume sufficient to house a material to be extracted.

The ring, filter and beverage extraction pod all have an absolute biodegradability of preferably 70% or greater, more preferably 90% or greater and even more preferably 95% or greater within 12 months, in a biodegradability test in a composting environment at 28°C according to ISO 14855-1. In this case, combination with the aforementioned ring makes the beverage extraction pod as a whole home compostable.

When the filter is a nonwoven fabric, the beverage extraction pod of the embodiment can be produced, for example, by a method comprising the following steps:

> a step of planar contact between the flange section of the ring and the heat moldable nonwoven fabric;
> a step of heating from the nonwoven fabric side to heat seal the nonwoven fabric and the flange section; and
> a step of molding the nonwoven fabric so that the nonwoven fabric passes through the ring interior to form a volume for housing of the material to be extracted.

The method for producing a beverage extraction pod of the embodiment may further comprise the following steps:

> a step of filling the material to be extracted into the filter; and
> a step of heat sealing a cover so that the material to be extracted is encapsulated.

EXAMPLES

The present invention will now be explained in detail using Examples and Comparative Examples. Throughout the Examples, the term "nonwoven fabric" may be interpreted as "filter", and the term "resin" may be interpreted as "thermoplastic resin" or "thermoplastic resin composition", as appropriate.

(1) Melting point Tm (°C) and degree of crystallinity (%) of ring and filter

The samples used were the thermoplastic resin composition (a) of the ring and the thermoplastic resin composition (b) of the filter. Using a DSC6000 differential scanning calorimeter by PerkinElmer, 3 to 6 mg of sample was increased in temperature from 20°C to 300°C at a temperature-elevating rate of 10°C/min. The apex of the peak corresponding to the melting peak in the resulting chart was used as the melting point Tm (°C). The heat quantities of the cold crystal sections and molten sections were calculated, and the crystallinity (%) was calculated by the following formula:

$$\text{Crystallinity } (\%) = (\Delta Hm - \Delta Hc)/\Delta Hf \times 100 \text{ (formula 1)}$$

{where $\Delta Hm$ and $\Delta Hc$ represent the endothermic enthalpy in DSC measurement and exothermic enthalpy by crystallization, respectively, and $\Delta Hf$ is the value described in the literature}.

(2) Heat sealability

(2)-1. Method of evaluating peel strength

The heat sealability is evaluated based on the peel strength between the ring flange section of the ring and the nonwoven fabric. However, since setting in a tensile tester is not possible, it is difficult to directly measure the peel strength between the ring flange section and the nonwoven fabric, and therefore measurement was carried out by the following procedure.

(i) Fabrication of resin sheet

In a rectangular die heated to a higher temperature than the melting point of the thermoplastic resin composition (a), an amount of chip-shaped thermoplastic resin composition (a) was measured out and poured in, to the amount of resin required for the ring flange section. Upon visually confirming that the thermoplastic resin composition (a) had melted, it was completely cooled and allowed to stand at ordinary temperature until solidification, to obtain a resin sheet. When two or more different thermoplastic resin compositions (a) were to be used, a dry blend was used in an arbitrary weight ratio.

(ii) Heat sealing of resin sheet and nonwoven fabric

Two samples each with a width of 30 mm and a length of 20 cm were cut out from the nonwoven fabric and resin sheet. The samples of the nonwoven fabric and resin sheet were combined at both ends in the widthwise direction with the nonwoven fabric samples facing upward, with stacking to about 8 mm in the lengthwise direction, and the overlapping sections were heat sealed. The heat sealing was carried out with a flat hot press from the top of the nonwoven fabric, under conditions with a pressure of 1 MPa, a temperature of 110°C and a pressure of 1 MPa, for a period of 2 sec.

(iii) Evaluation of peel strength

A heat sealed sample was mounted on a tensile tester with a grip spacing of 10 cm so that the heat sealed section was positioned at the center and peeling was at 180°, and the peel strength (N/30 mm) was measured at a pull rate of 100 mm/min. Measurement was performed twice for the different samples, and the average value was recorded as the peel strength (N/30 mm). A higher peel strength corresponds to higher heat sealability.

(2)-2. Organoleptic evaluation method

Ten heat sealed samples of the ring and filter were prepared, and separated by hand by two individuals, at five each. The separated number was counted and evaluated on the following scale.

(Evaluation scale)

5 points: None were separated.
4 points: Two were separated.
3 points: Four were separated.
2 points: Six were separated.
1 point: Eight or more separated.

(3) Home compostability

The home compostability of the examined material was evaluated according to ISO 14855-1. A biodegradability test for the resin was conducted in a composting environment at 28°C, and evaluation was conducted on the following scale.

(Evaluation scale)

VG: Absolute biodegradability of 95% or greater within 12 months.
G: Absolute biodegradability of 90% or greater and less than 95% within 12 months.
F: Absolute biodegradability of 70% or greater and less than 90% within 12 months.

P: Absolute biodegradability of less than 70% within 12 months.

(4) Ring thickness

The thickness of the ring was measured at 4 points in circular symmetrical positions using a digital caliper. Each measured value was recorded and the average value was calculated.

(5) Nonwoven fabric thickness

The thickness of the nonwoven fabric was measured by the following procedure.

(i) 5 cm $\times$ 5 cm size sections were obtained from 5 locations with different nonwoven fabric positions.
(ii) The thickness of each section was measured using an ABS Digimatic Indicator ID-CX (Mitsutoyo Corp.). The probe used was a $\varphi$15 mm flat probe.
(iii) The average value of the 5 points obtained in (ii) was recorded as the thickness of the nonwoven fabric.

The thickness difference ratio between the ring flange surface and the filter (nonwoven fabric) was determined by the following calculation:

Thickness difference ratio between ring flange surface and filter (nonwoven fabric) = {(Thickness of flange surface of beverage extraction pod ring) - (thickness of filter)}/(thickness of flange surface of beverage extraction pod ring) $\times$ 100

(6) Air permeability of nonwoven fabric

This was measured using the method specified by JISL1096 Gas Permeability Method A (Frazier method).

[Production of ring A]

A ring was fabricated by common injection molding. Specifically, a particulate PBSA resin (FORZEAS$^R$, product of Mitsubishi Chemical Holdings Corp.) as the starting material (a) was fed into a heating cylinder, the thermoplastic resin composition (a) was delivered to the nozzle end of a screw tip while melting the thermoplastic resin composition (a) by rotation of a screw which was provided in a heating cylinder set to a temperature of the melting point of the thermoplastic resin composition (a) + 80°C, and the screw was moved forward to caused injection of the molten thermoplastic resin composition (a) through an injection nozzle provided at the tip end of the screw into the cavity of a closed die (designed so that the ring dimensions were "side wall: 43 mm inner diameter, 45 mm outer diameter, 8 mm length, and flange section: 45 mm inner diameter, 52 mm outer diameter and 3 mm thickness"), the thermoplastic resin composition (a) being cooled and solidified in the cavity, after which the die was opened and the molded article attached to the inner surface of the die was removed using a protruding pin or similar tool to fabricate ring A. The shape of the obtained ring A had the outer appearance shown in Fig. 1. The shape of each ring is shown in Table 1.

[Production of ring B]

Ring B was obtained by molding a resin obtained by blending a PBSA resin (FORZEAS$^R$ by Mitsubishi Chemical Holdings Corp.) and a PBS resin (FORZEAS$^R$ by Mitsubishi Chemical Holdings Corp.) in a proportion of 90:10, as the thermoplastic resin composition (a), by the same method as for ring A, except for using a die designed for a ring flange section thickness of 1 mm. The shape of the obtained ring B is shown in Fig. 1, and the shape of each is shown in Table 1.

[Production of ring C]

Ring C was obtained by molding by the same method as for ring B, except for using a die designed with dimensions for a ring flange section thickness of 3 mm. The shape of the obtained ring C is as shown in Fig. 1, and the shape of each section is shown in Table 1.

[Production of ring D]

Ring D was obtained by molding by the same method as for ring B, except for using a die designed with dimensions for a ring flange section thickness of 6 mm. The shape of the obtained ring D is as shown in Fig. 1, and the shape of each section is shown in Table 1.

[Production of ring E]

Ring E was obtained by molding by the same method as for ring C, except that the thermoplastic resin A used was a thermoplastic resin composition (a) obtained by blending a PBSA resin (FORZEAS[R] by Mitsubishi Chemical Holdings Corp.) and a PBS resin (FORZEAS[R] by Mitsubishi Chemical Holdings Corp.) in a proportion of 80:20. The shape of the obtained ring E is as shown in Fig. 1, and the shape of each section is shown in Table 1.

[Production of ring F]

Ring F was obtained by molding by the same method as for ring C, except that the thermoplastic resin A used was a thermoplastic resin composition (a) obtained by blending a PBSA resin (FORZEAS[R] by Mitsubishi Chemical Holdings Corp.) and a PBS resin (FORZEAS[R] by Mitsubishi Chemical Holdings Corp.) in a proportion of 50:50. The shape of the obtained ring F is as shown in Fig. 1, and the shape of each section is shown in Table 1.

[Production of ring G]

Ring G was obtained by molding by the same method as for ring A, except that the thermoplastic resin A used was PLA (6202D by Nature Works). The shape of the obtained ring G is as shown in Fig. 1, and the shape of each section is shown in Table 1.

[Production of ring H]

Ring H was obtained by molding by the same method as for ring A, except that the thermoplastic resin A used was PBS (FORZEAS[R] by Mitsubishi Chemical Holdings Corp.). The shape of the obtained ring H is as shown in Fig. 1, and the shape of each section is shown in Table 1.

[Production of ring I]

Ring I was obtained by molding by the same method as for ring A, except that the thermoplastic resin A used was PHA (H1009-H, product of Danimer Scientific). The shape of the obtained ring I is as shown in Fig. 1, and the shape of each section is shown in Table 1.

[Production of nonwoven fabric (a)]

Polybutylene adipate terephthalate (PBAT) was used as the thermoplastic resin composition (b) for melting and kneading with a single-screw extruder, followed by extrusion by a spunbond method at a throughput of 0.9 g/(min·hole) and a spinning temperature of 210°C, and then the filament group was drawn with a high-speed airflow traction device using an air jet, accumulating them on a moving collection surface, to prepare a biodegradable long fiber web (circular cross-section).
Next, a pair of embossing rolls, specifically a roll with a concavoconvex pattern on the surface and a roll having a smooth surface, were used for thermocompression bonding under conditions with a contact bonding area ratio of 11%, a temperature of 95°C on both rolls, and a roll linear pressure of 20 N/mm, to obtain nonwoven fabric "a" with a basis weight of 130 g/m$^2$. The physical properties of the obtained nonwoven fabric are shown in Table 1.

[Production of nonwoven fabric "b"]

Nonwoven fabric "b" was produced by the same method as for nonwoven fabric "a", except that the fiber size was adjusted so that the air permeability was 15 cm$^3$/(cm$^2$·s). The physical properties of the obtained nonwoven fabric are shown in Table 1.

[Production of nonwoven fabric "c"]

Nonwoven fabric "c" was produced by the same method as for nonwoven fabric "a", except that the fiber size was adjusted so that the air permeability was 63 cm$^3$/(cm$^2$·s). The physical properties of the obtained nonwoven fabric are shown in Table 1.

[Production of nonwoven fabric "d"]

Nonwoven fabric "d" was produced by the same method as for nonwoven fabric "a", except that the speed of the moving collection surface was adjusted so that the basis weight was 250 g/m$^2$. The physical properties of the obtained nonwoven fabric are shown in Table 1.

[Production of nonwoven fabric "e"]

Nonwoven fabric "e" was produced by the same method as for nonwoven fabric "a", except that polybutylene succinate resin (PBS) was used as the thermoplastic resin composition (b). The physical properties of the obtained nonwoven fabric are shown in Table 1.

[Production of beverage extraction pods]

[Example 1]

Ring A and nonwoven fabric "a" were used to prepare beverage pods. After placing the nonwoven fabric on the top of the ring, it was heat sealed with the top side of the nonwoven fabric as the heating surface, under conditions with a temperature of 110°C and a pressure of 0.2 MPa. The nonwoven fabric alone was then hot molded so that the nonwoven fabric passed through the ring and along the inner diameter of the ring, to obtain a capsule-like beverage extraction pod.
The heat sealability of the obtained pod was evaluated by an organoleptic evaluation. The results are shown in Table 1 below.

[Examples 2 to 10 and Comparative Examples 1 to 4]

Capsule-type beverage extraction pods were obtained by the same method as Example 1, except that the rings and nonwoven fabrics were used in the combinations shown in Table 1. The heat sealability of each obtained pod was evaluated by an organoleptic evaluation. The results are shown in Table 1 below.
The thermoplastic resin composition (a) in Table 1 is also referred to as "ring starting material" or "starting resin", and the thermoplastic resin composition (b) is also referred to as "filter starting resin".

[Table 1]

| | | | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|---|---|---|---|---|---|---|---|---|---|
| Ring | | No. | | A | C | E | F | B | D | C | C | C | C | G | H | I | A |
| | Thermoplastic resin composition (a) | - | - | PBSA | PBSA +PBS | PBSA +PBS | PBSA +PBS | PBSA +PBS | PBSA +PBS | PBSA +PBS | PBSA +PBS | PBSA +PBS | PBSA +PBS | PLA | PBS | PHA | PBAT |
| | | PBS blend ratio | % | 0 | 10 | 20 | 49 | 10 | 10 | 10 | 10 | 10 | 10 | 0 | 0 | 0 | 0 |
| | | Melting point | °C | 88 | 90 | 100 | 110 | 90 | 90 | 90 | 90 | 90 | 90 | 160 | 118 | 180 | 115 |
| | | Degree of crystallinity | % | 62 | 27 | 38 | 53 | 27 | 27 | 27 | 27 | 27 | 27 | 28 | 37 | 46 | 26 |
| | | Home compostability | - | VG | VG | G | F | VG | G | VG | VG | VG | VG | P | P | G | VG |
| | Flange | Inner diameter | mm | 44.3 | 44.3 | 44.1 | 44.5 | 44.3 | 44.3 | 44.3 | 44.3 | 44.3 | 44.3 | 44.0 | 44.2 | 44.3 | 44.3 |
| | | Outer diameter | mm | 50.4 | 50.4 | 50.6 | 50.4 | 50.4 | 50.4 | 50.4 | 50.4 | 50.4 | 50.4 | 50.3 | 50.2 | 50.4 | 50.4 |
| | | Thickness | mm | 3.0 | 3.0 | 3.0 | 3.0 | 1.0 | 6.0 | 3.0 | 3.0 | 3.0 | 3.0 | 3.0 | 3.0 | 3.0 | 3.0 |
| | Side wall | Diameter at narrowest part | mm | 42.1 | 42.1 | 42.1 | 42.1 | 42.1 | 41.7 | 42.1 | 42.1 | 42.1 | 42.1 | 42.1 | 42.3 | 41.9 | 42.1 |
| | | Diameter at widest part | mm | 44.3 | 44.3 | 44.3 | 44.3 | 44.3 | 44.0 | 44.3 | 44.3 | 44.3 | 44.3 | 44.3 | 44.1 | 44.3 | 44.3 |
| | | Thickness | mm | 1.1 | 1.1 | 1.1 | 1.1 | 1.1 | 1.3 | 1.1 | 1.1 | 1.1 | 1.1 | 1.1 | 1.1 | 1.1 | 1.1 |
| | | Length of side wall | mm | 8 | 8 | 8 | 8 | 8 | 8 | 8 | 8 | 8 | 8 | 8 | 8 | 8 | 8 |

| | | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|---|---|---|---|---|---|---|---|---|
| | No. | | a | a | a | a | a | a | b | c | e | d | a | a | a | a |
| Filter | Thermoplastic resin composition (b) | - | PBAT | PBAT | PBAT | PBAT | PBAT | PBAT | PBAT | PBAT | PBS | PBAT | PBAT | PBAT | PBAT | PBAT |
| | Filter (nonwoven fabric) | Melting point °C | 115 | 115 | 115 | 115 | 115 | 115 | 115 | 115 | 118 | 115 | 115 | 115 | 115 | 115 |
| | | Basis weight $g/m^2$ | 130 | 130 | 130 | 130 | 130 | 130 | 130 | 130 | 130 | 250 | 130 | 130 | 130 | 130 |
| | | Fiber size $\mu m$ | 14 | 14 | 14 | 14 | 14 | 14 | 13 | 25 | 14 | 14 | 14 | 14 | 14 | 14 |
| | | Thickness mm | 0.35 | 0.35 | 0.05 | 0.35 | 0.35 | 0.35 | 0.35 | 0.35 | 0.35 | 0.62 | 0.35 | 0.35 | 0.35 | 0.35 |
| | | Air permeability $cm^3/(cm^2{\cdot}s)$ | 24 | 24 | 24 | 24 | 24 | 24 | 15 | 63 | 24 | 10 | 24 | 24 | 24 | 24 |
| | | Home compostability | VG | VG | VG | VG | VG | VG | VG | VG | F | VG | VG | VG | VG | VG |
| Ring and filter | Melting point difference - | | 27 | 25 | 15 | 5 | 25 | 25 | 25 | 25 | 28 | 25 | -45 | -3 | -65 | 0 |
| | Thickness difference ratio % | | 88 | 88 | 98 | 88 | 65 | 94 | 88 | 88 | 88 | 79 | 88 | 88 | 88 | 88 |
| Beverage extraction pod | Home compostability | | VG | VG | G | F | VG | G | VG | VG | F | VG | P | P | G | VG |
| Peel strength (heat sealability) | Filter: resin sheet N/30 mm | | 25 | 21 | 19 | 17 | 20 | 26 | 16 | 28 | 25 | 15 | 0.8 | 7 | 0.9 | 10 |
| | Pod evaluation Points | | 5 | 5 | 5 | 5 | 5 | 5 | 5 | 5 | 5 | 5 | 1 | 2 | 1 | 2 |

EP 4 786 363 A1

12

INDUSTRIAL APPLICABILITY

The beverage extraction pod ring of the invention is composed of a home-compostable thermoplastic resin composition (a), and also has satisfactory heat sealability with the filter composed of the thermoplastic resin composition (b) which is also home-compostable, and it can therefore be suitably used for a home-compostable beverage extraction pod; for example, it may be suitably used as a ring for a beverage extraction pod for coffee, black tea, green tea or Chinese tea.

REFERENCE SIGNS LIST

1 Beverage extraction pod ring
11 Side wall
12 Flange surface (section)
2 Beverage extraction pod
21 Volume for housing material to be extracted
22 Filter

**Claims**

1. A beverage extraction pod ring comprising a filter with a volume sufficient to house a material to be extracted, a tubular side wall bonded to a flange surface of the ring and adapted to form a beverage extraction pod, and a flange surface protruding outward from the tubular side wall, wherein the ring is constructed of a thermoplastic resin composition (a) which is composed mainly of a thermoplastic resin A and differs from another thermoplastic resin composition (b) composed mainly of a thermoplastic resin B forming the filter, the thermoplastic resin A being a polyalkylene dicarboxylate, and the melting point of the thermoplastic resin composition (a) being lower than the melting point of the thermoplastic resin composition (b).

2. The beverage extraction pod ring according to claim 1, wherein the difference in melting points of the thermoplastic resin composition (a) and the thermoplastic resin composition (b) is 10°C or more.

3. The beverage extraction pod ring according to claim 1 or 2, wherein the thermoplastic resin A is polyalkylene dicarboxylate in which either or both aliphatic dicarboxylic acid and straight-chain glycol supplied for polycondensation are of two or more types.

4. The beverage extraction pod ring according to claim 1 or 2, wherein the thermoplastic resin A is polybutylene succinate adipate (PBSA).

5. The beverage extraction pod comprising the beverage extraction pod ring according to claim 1 or 2, and the filter bonded to the ring flange surface and having a volume sufficient to house a material to be extracted.

6. The beverage extraction pod according to claim 5, wherein the ring has an absolute biodegradability of 70% or greater within 12 months, in a biodegradability test in a composting environment of 28°C according to ISO 14855-1.

7. The beverage extraction pod according to claim 5, wherein the thermoplastic resin B is polybutylene adipate terephthalate (PBAT).

8. The beverage extraction pod according to claim 5, wherein the filter is a nonwoven fabric.

9. The beverage extraction pod according to claim 5, wherein an air permeability of the filter is 10 cm$^3$/(cm$^2$·s) or greater.

10. The beverage extraction pod according to claim 5, wherein the ratio of the thickness difference between the ring and the filter, as calculated by [{ (the thickness of flange surface of beverage extraction pod ring) - (the thickness of filter)}/(the thickness of flange surface of beverage extraction pod ring)] $\times$ 100, is 70% or greater.

# Fig. 1

# Fig. 2

## INTERNATIONAL SEARCH REPORT

| International application No. |
|---|
| **PCT/JP2024/034326** |

**A. CLASSIFICATION OF SUBJECT MATTER**

***B65D 25/20***(2006.01)i; ***B65D 85/804***(2006.01)i
FI:    B65D25/20 Z BRQ; B65D85/804 200

According to International Patent Classification (IPC) or to both national classification and IPC

**B. FIELDS SEARCHED**

Minimum documentation searched (classification system followed by classification symbols)

B65D25/20; B65D85/804

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-522150 A (RAPPARINI, G.) 10 August 2017 (2017-08-10) paragraphs [0062]-[0065], fig. 1, 6 | 1-2 |
| Y | | 3-10 |
| Y | JP 10-157803 A (UNI-CHARM CO., LTD.) 16 June 1998 (1998-06-16) paragraphs [0034]-[0037] | 3-4 |
| Y | JP 2021-102669 A (KANEKA CORP.) 15 July 2021 (2021-07-15) paragraph [0034] | 3-4, 7 |
| Y | JP 2011-157118 A (ASAHI KASEI FIBERS CORPORATION) 18 August 2011 (2011-08-18) claim 1, paragraph [0025] | 3-4, 7-10 |
| Y | JP 2019-71962 A (ASAHI KASEI KABUSHIKI KAISHA) 16 May 2019 (2019-05-16) claim 1, fig. 3 | 5-10 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/034326**

| Patent document cited in search report | | | Publication date (day/month/year) | Patent family member(s) | | | Publication date (day/month/year) |
|---|---|---|---|---|---|---|---|
| JP | 2017-522150 | A | 10 August 2017 | US<br>paragraphs [0066]-[0069], fig.<br>1, 6<br>WO<br>CA | 2017/0210534<br><br><br>2015/186035<br>2950702 | A1<br><br><br>A1<br>A1 | |
| JP | 10-157803 | A | 16 June 1998 | (Family: none) | | | |
| JP | 2021-102669 | A | 15 July 2021 | (Family: none) | | | |
| JP | 2011-157118 | A | 18 August 2011 | (Family: none) | | | |
| JP | 2019-71962 | A | 16 May 2019 | (Family: none) | | | |

Form PCT/ISA/210 (patent family annex) (July 2022)

**EP 4 786 363 A1**

**REFERENCES CITED IN THE DESCRIPTION**

**Patent documents cited in the description**

- JP 2017522150 A